# EUROPÄISCHE PATENTSCHRIFT

(11) **EP 1 808 454 B1**
(45) Veröffentlichungstag und Bekanntmachung des Hinweises auf die Patenterteilung: **21.09.2011**
(21) Anmeldenummer: 07000522.8
(22) Anmeldetag: 11.01.2007
(51) Int. Cl.: C08J 9/00, C08J 9/30, C08L 61/20

(54) **Treibmittelfreier Aminoharzschaum, Verfahren zu dessen Herstellung und dessen Verwendung**
Amino resin foam free of blowing agents, production method thereof, and application thereof
Mousse de résine aminoplaste dépourvue d'agent d'expansion, son procédé de fabrication et son utilisation

(30) Priorität: 13.01.2006 DE 102006001862
(43) Veröffentlichungstag der Anmeldung: 18.07.2007
(73) Patentinhaber: Fraunhofer-Gesellschaft zur Förderung der angewandten Forschung e.V., 80686 München (DE)
(72) Erfinder: Börner, Frank, Dr., 13503 Berlin (DE); Rafler, Gerald, Dr., 14473 Potsdam (DE)
(74) Vertreter: Pfenning, Meinig & Partner GbR

(56) Entgegenhaltungen:
- WO-A-2005/103107
- DE-A1- 10 047 719
- DE-A1-102004 014 287
- US-A1- 2002 128 336

## Beschreibung

Die Erfindung betrifft ein Verfahren zur Herstellung eines treibmittelfreien Aminoharzschaums, der aus einem Aminoharz und hydrophoben Nanopartikeln aufgebaut ist, durch Aufschäumen einer Dispersion eines Aminoharzvorkondensats, den Nanopartikeln und Luft mit anschließendem Aushärten. Verwendung finden die erfindungsgemäß hergestellten Aminoharzschäume aufgrund ihrer Material- und Grenzflächeneigenschaften als Schall- und Energiedämmstoffe.

Schaummaterialien werden aufgrund ihrer chemischen und morphologischen Struktur und der daraus resultierenden Eigenschaften in vielfältiger Weise als Werkstoff oder Isolationsmaterial zur Schall- und/oder Wärmedämmung eingesetzt. Die Erzeugung der Schaumstoffe kann durch Zersetzung von Blähmitteln oder mechanisch mittels intensiven Rührens bzw. physikalisch durch Verdampfen leichtflüchtiger Flüssigkeiten bzw. komprimierter Gase erfolgen. Bekannt sind Schäume auf Basis Polystyren bzw. Polypropylen sowie ausgewählten netzwerkbildenden Polymeren, wie Polyurethanen, Phenol- und Aminoharzen. Für die Schall- und Wärmedämmung in sicherheitsrelevanten Bereichen, wie öffentlichen Gebäuden und vor allem dem Transportsektor sind Aminoharz-, insbesondere Melaminharzschäume bzw. Schäume auf Basis geeigneter Melaminderivate, infolge ihrer Flammwidrigkeit besonders interessant. Sie müssen im Gegensatz zu allen anderen Schaummaterialien bei Anwendungen mit höheren sicherheitstechnischen Anforderungen infolge der Flammwidrigkeit des melaminbasierten Schaumskeletts nicht speziell mit Flammschutzadditiven ausgerüstet werden.

Die bekannten Aminoharzschäume auf Basis von Harnstoff/Formaldehyd- oder Melamin/ Formaldehyd-Präkondensaten sind zumeist unflexible und relativ spröde Hartschaumstoffe. Lediglich der von der BASF AG entwickelte Melaminharzschaum BASOTECT ist ein hochflexibles Produkt mit offenzelliger Struktur (DE 100 47 719). Die Flexibilität dieses Schaumes aus einem Netzwerkpolymer wird durch eine speziell an das Endprodukt adaptierte Verfahrenstechnologie von Schaumbildung und Härtung des Melamin/Formaldehyd-Kondensats erreicht. Die Offenzelligkeit der Aminoharzschäume ist bei vielen Anwendungen unerwünscht. Durch Hydrophobierung des Schaumskeletts mit Silikonen oder Kautschuken lässt sich die hohe Wasseraufnahmefähigkeit offenzelliger Melaminharzschäume (bis 95 Vol.-%) signifikant erniedrigen (DE 694 13 145). Auch Kombinationen von offenzelligen Melaminharzschäumen mit geschlossenzelligen Polyolefinschäumen (DE 103 40 021) oder konstruktive Lösungen mit dem Melaminharzschaum als Kernmaterial und Ummantelung mit einem zweiten Kunststoff werden angewandt, um die für viele Applikationen unerwünschte Offenzelligkeit zu überwinden und die nicht brennbaren Melaminharzschäume als energie- und schallabsorbierende Verkleidung, beispielsweise im Transportsektor, problemlos einsetzen zu können (DE 691 20 223).

Mechanisch stabile bzw. flexible Melaminharzschäume erfordern entsprechend dem Stand der Technik den Einsatz leichtflüchtiger, organischer Treibmittel zur Generierung der Hohlraumstruktur des Schaumes (EP 0 017 671). Als leichtflüchtige Treibmittel werden vorzugsweise aliphatische Kohlenwasserstoffe, wie Pentan und Hexan, oder Halogenkohlenwasserstoffe, vorzugsweise partiell fluorierte, eingesetzt. Desweiteren benötigt der Schäumprozess weitere Additive, vorzugsweise anionische oder kationische Tenside, wie Alkyl- und Alkylarylsulfonate bzw. Fettsäuretriethanolaminester oder Alkylpyridiniumhalogenide. Wird der Schaum in der wässrigen Aminoharzphase nur mechanisch durch Einrühren von Luft erzeugt, so werden dem Stand der Technik entsprechend nur spröde Materialien mit relativ hoher Dichte erhalten.

Sprödigkeit und fehlende Druckstabilität der durch ein mechanisches Schäumungsverfahren erzeugten Melaminharzschäume sowie Offenzelligkeit und Wasseraufnahme sowie Einsatz von organischen Treibmitteln für die Herstellung technisch brauchbarer Produkte begrenzen das um ein Vielfaches höhere Einsatzpotenzial von Melaminharzschäumen in sicherheitsrelevanten Bereichen.

Aus der WO 2005/103107 sind modifizierte offenzellige Schaumstoffe mit einer Dichte im Bereich von 5 bis 1000 kg/m³ bekannt, die einen mittleren Porendurchmesser im Bereich von 1 µm und 1 mm, eine BET-Oberfläche im Bereich von 0,1 bis 50 m²/g und einen Schallabsorptionsgrad im Bereich von mehr als 50 % bei einer Frequenz von 2000 Hz bei einer Schichtdicke von 50 mm aufweisen, die in einem Bereich von 1 bis 4000 ppm, bezogen auf das Gewicht des unmodifizierten offenzelligen Schaumstoffs fixierte Partikel mit einem mittleren Durchmesser (Zahlenmittel) im Bereich von 5 nm bis 900 nm enthalten.

Die US 2002/0128336 betrifft einen Schaum der oberflächenmodifizierte Nanopartikel beinhaltet. Die hierbei beinhalteten Nanopartikel haben einen mittleren Durchmesser von weniger als 100 nm.

Zudem betrifft die DE 10 2004 014 287 ein Verfahren zur Herstellung von Polymerschäumen aus Polykondensations-Reaktivharzen mit maximal 1 µm Porendurchmesser.

Der Erfindung liegt die Aufgabe zugrunde, ein Verfahren zur Herstellung eines hydrophobierten, mechanisch stabilen Aminoharzschaums für die Schall- und Wärmedämmung zu entwickeln, das mittels eines intensiven mechanischen Schäumungsprozesses ohne Zusatz von speziellen Treibmitteln auf technologisch einfache Weise ausgeführt werden kann.

Diese Aufgabe wird durch das Verfahren zur Herstellung eines treibmittelfreien Aminoharzschaums mit den Merkmalen des Anspruchs 1 gelöst. Erfindungsgemäße Verwendungen sind in Anspruch 17 angegeben. Die weiteren abhängigen Ansprüche zeigen vorteilhafte Weiterbildungen auf.

Der erfindungsgemäß hergestellte treibmittelfreie Aminoharzschaum enthält einen Aminoharzschaum und zumindest an der Oberfläche hydrophobe Nanopartikel aus einem anorganischen und/oder organischen Material.

Somit werden Nanopartikel zur Hydrophobierung des Aminoharzschaumes sowie zur Stabilisierung der Luft/Aminoharz-Dispersion während des Schäumungsprozesses eingesetzt. Für die Hydrophobierung des an sich hydrophilen Schaumes und für den Herstellungsprozess prinzipiell geeignet sind organische und vor allem anorganische nanoskalige Teilchen, die sich in der wässrigen Aminoharzphase mechanisch gut dispergieren lassen und nur eine begrenzte Kompatibilität zu der Aminoharzmatrix aufweisen. Nanoskaligkeit mit dem daraus folgenden hohen Anteil hydrophober Zentren an der Partikeloberfläche im Vergleich zum gesamten Partikelvolumen ist Voraussetzung für die Effizienz der Partikel im Schäumungsprozess und bei der Ausbildung der ausgezeichneten mechanischen und thermischen Eigenschaften dieses Hartschaums.

Erfindungsgemäß einsetzbar sind sphärische und nichtsphärische, hydrophobe Nanopartikel, wobei die Hydrophobie direkt aus der Struktur des partikelbildenden Materials resultiert oder durch entsprechende Ausrüstung der Partikeloberflächen erzeugt werden kann. Für den Schäumprozess bevorzugte Nanopartikel sind hydrophob modifizierte nanoskalige Kieselgele, Aluminiumoxide und Titanoxide sowie Schichtsilikate und Schichthydroxide als anorganische Materialien mit sphärischen Geometrien bzw. hoher geometrischer Anisotropie. Als organische Nanopartikel sind Nanodispersionen geeigneter Polymere, wie sie durch Emulsionspolymerisation von Polystyren oder Methacrylaten erhalten werden, für den Schäumungsprozess ebenso bevorzugt. Unter Sicherheitsaspekten hinsichtlich der Brenneigenschaften sowie aus Kostengründen werden jedoch anorganische Nanopartikel favorisiert.

Das Schaumskelett wird aus den bekannten Aminoharzen auf Basis Melamin und Formaldehyd oder Harnstoff und Formaldehyd gebildet. Es können auch Melamin/Harnstoff-Mischungen sowie Derivate von Melamin oder Harnstoff die Aminokomponente des Harzes bilden. Als geeignete Komponenten für die Modifizierung der Schaumeigenschaften sind insbesondere Derivate mit niedrigerer Funktionalität, wie Benzoguanamin oder Dicyandiamid zu benennen.

Die Herstellung des Aminoharzschaums gliedert sich in folgende Verfahrensschritte
- Herstellung der wässrigen Nanopartikel/Aminoharz-Dispersion
- Kondensation des Präpolymersen unter gleichzeitigem Einrühren von Luft mit einem Hochleistungsrühr- oder -dispergiersystem (z.B. Dispergierscheibe, Ultra-Turrax) und
- thermisch induziertes Aufschäumen durch verdampfendes Wasser und niedrig siedende Reaktionsprodukte des Kondensationsprozesses.

Der Aminoharzschaum kann aus kommerziell verfügbaren wässrigen Aminoharzlösungen, vorzugsweise Melamin/Formaldehyd-Vorkondensatlösungen, modifizierten und unmodifizierten Festharzen oder auch aus den Komponenten, vor allem Melamin und Formaldehyd, direkt hergestellt werden.

Werden die Aminoharzkomponenten direkt als Ausgangsstoffe eingesetzt, muss vor dem Schäumungsprozess zunächst die Synthese der Vorkondensate erfolgen.

Festharze sind vor dem Verschäumen zu lösen, wobei eine Konzentration von 50 bis 70 % einzustellen ist.

Die Kondensation des Präpolymeren wird sauer katalysiert in der Rühr- und Dispergierstufe bei Temperaturen von 40 bis 60 °C und in der Ausschäum- und Härtungsstufe bei 80 bis 140 °C durchgeführt. Erfindungsgemäß wird über das Temperaturregime in der Dispergier- sowie Ausschäum- und Aushärtungsstufe bei gegebener Aminoharzstruktur das Eigenschaftsprofil des Schaumes eingestellt. Niedrigere Temperaturen in der Ausschäum- und Aushärtungsphase führen zu dichteren, höhere zu lockereren Schaumstrukturen und damit zu leichteren Schäumen.

Katalysatoren der Aminoharzkondensation sind bekannterweise anorganische oder organische Säuren, wie Phosphor-, Amidosulfon-, Zitronen- oder Isophthalsäure.

Zur Ausschäumung und Aushärtung der feinteiligen ternären Luft/Nanopartikel/Aminoharz-Dispersion sind bei vorgegebenen Schaumgeometrien entsprechende Formen einzusetzen, die die ungehinderte Abführung des Wassers ermöglichen müssen und über die die geometrische Form des Schaums apparativ eingestellt wird. Auch "freies" Aushärten der Luft/Nanopartikel/Aminoharz-Dispersion ist möglich.

Der Prozess der Schaumherstellung kann kontinuierlich oder ansatzweise durchgeführt werden. Bei kontinuierlicher Herstellung sind zur Dispergierung der Aminoharz/Nanopartikel-Dispersion entsprechende Durchflussdispergatoren mit Lufteintrag und zur Aushärtung das für die Schaumherstellung übliche Equipment einzusetzen. Im kontinuierlichen Betrieb werden Halb-zeuge in Form von Platten oder Blöcken hergestellt. Im diskontinuierlichen Prozess sind geschäumte Formteile direkt zugänglich.

Die erfindungsgemäß hergestellten nanopartikelhaltigen Melaminharzschäume weisen eine ausgeprägte Hydrophobie auf. Die Oberflächen dieser Schäume werden durch Wasser nicht benetzt und aufgebrachtes Wasser perlt ab. Dieser ausgeprägte wasserabweisende Effekt ist nicht nur eine Oberflächeneigenschaft dieser Schäume, sondern auch im Inneren des Materials bleibt er ohne Einschränkungen erhalten. Aus Halbzeugen dieser Schäume mechanisch herausgearbeitete Werkstücke können damit in gleicher Weise eingesetzt werden, wie in Formen hergestellte.

Die Dichte der Schäume ist eine komplexe Funktion von Materialdichte, Hohlraumanteil und Schaumskelettstruktur. Sie ist damit in begrenztem Umfang durch die Materialauswahl und in hohem Maße durch die Bedingungen des Schäumungsprozesses einstellbar. So konnten für einen Melaminharzschaum eine Schaumdichte von 0,05 bis 0,55 g/cm³ in Abhängigkeit von den Prozessbedingungen eingestellt werden. Geringe Dichten erfordern höhere Temperaturen von 120 bis 140°C in der Ausschäum- und Härtungsphase. Dichtere Schäume werden bei Temperaturen von 80 bis 100 °C erhalten

In ähnlicher Weise ist auch die Druckfestigkeit ein material- und technologieabhängiger Eigenschaftsparameter der Schäume, wobei jedoch insgesamt mechanisch sehr stabile Strukturen nach dem erfindungsgemäßen Verfahren hergestellt werden können. Mit Schäumen geringer Dichte auf Basis Melamin sind Materialien mit Druckfestigkeiten bis 0,8 MPa herstellbar.

Als Hartschäume sind die Materialien vorzugsweise zur Schall- und/oder Energiedämmung vorgesehen. Da mit den Aminoharzen eine duromere Materialbasis zugrundeliegt, sind die Schäume nichtschmelzend und im Falle des Einsatzes von Melamin oder Melaminderivat/Formaldehyd-Harzen auch thermisch bis 160 °C stabil. In Abhängigkeit von der Struktur des Schaumes werden Wärmeleitfähigkeiten von 0,03 bis 0,04 W/(m*K) ermittelt.

Das erfindungsgemäße Verfahren zur Herstellung treibmittelfreier Aminoharzschäume, wie sie zuvor beschrieben wurden, basiert auf folgenden Schritten:
a) Zunächst erfolgt ein disperses Mischen einer wässrigen Lösung, die mindestens ein Aminoharz-Präpolymer und zumindest an der Oberfläche hydrophobe Nanopartikel aus einem anorganischen oder organischen Material enthält.
b) Es folgt eine Kondensation des mindestens einen Aminoharz-Präpolymers unter gleichzeitigem intensiven Einmischen von Luft zur Ausbildung einer ternären Dispersion aus Aminoharz, Nanopartikeln und Luft.
c) Anschließend erfolgt ein thermisch induziertes Aufschäumen unter Ausbildung eines Aminoharzschaums.

Die erfindungsgemäß hergestellten Aminoharzschäume finden als Werkstoff oder Isoliermaterial jeweils zur Schall- oder Wärmedämmung Verwendung.

Die Erfindung wird anhand der nachfolgenden Figuren und Beispiele näher erläutert, ohne diese auf die hier dargestellten speziellen Ausführungsformen einschränken zu wollen.
Fig. 1 zeigt eine elektronenmikroskopische Aufnahme der Bruchfläche eines erfindungsgemäß hergestellten Aminoharzschaums mit einer Auflösung 1:10000.
Fig. 2 zeigt eine elektronenmikroskopische Aufnahme der Oberfläche eines erfindungsgemäß hergestellten Aminoharzschaums mit einer Auflösung von 1:28.

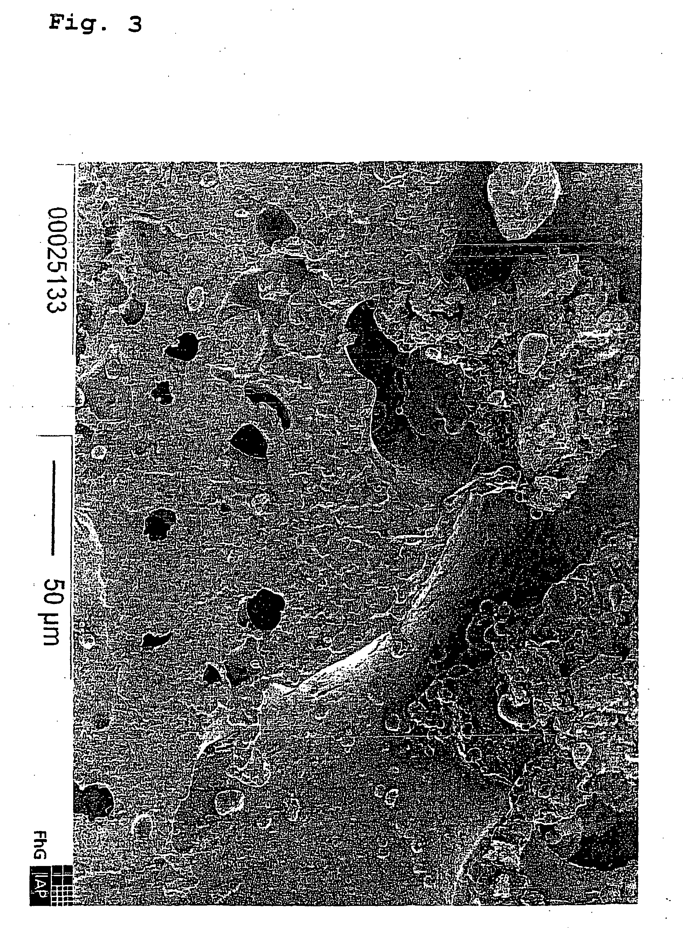

Fig. 3 zeigt eine elektronenmikroskopische Aufnahme der Oberfläche eines erfindungsgemäß hergestellten Aminoharzschaums mit einer Auflösung von 1:278.

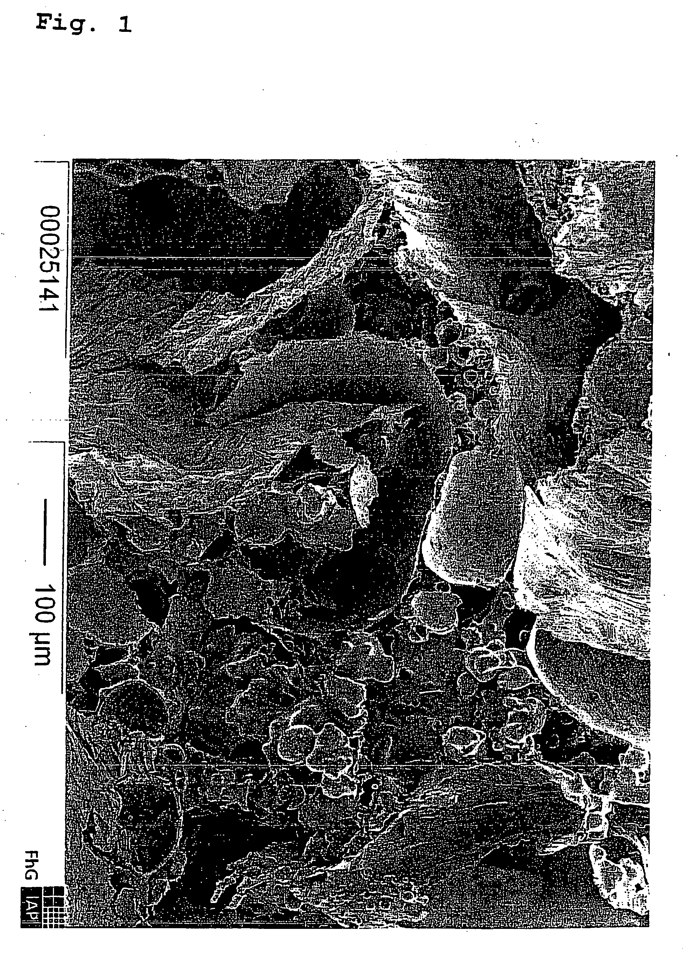

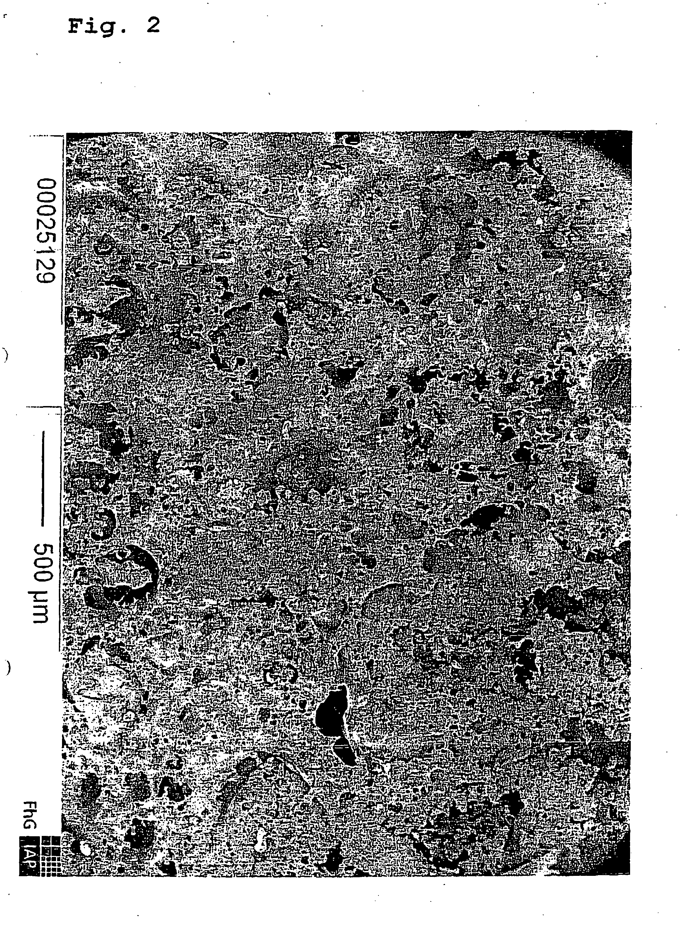

Elektronenmikroskopische Aufnahmen der Bruchflächen der erfindungsgemäß hergestellten Schäume zeigen, dass die Materialien einen hohen Anteil geschlossenporiger Strukturen aufweisen (Fig. 1). Auch die Oberflächen sind durch Verfilmung von Hohlkugeln zu hohen Anteilen verschlossen (Fig. 2). Entsprechend den morphologischen Strukturen von Schaumskelett und Schaumoberfläche schwimmen die Schäume auch unter Belastung unbegrenzt auf Wasser.

### Beispiel 1

200 g Melamin werden mit 257 g einer 30 %-igen wässrigen Formaldehydlösung, die auf pH=8 mit Kaliumcarbonat eingestellt wird, 1 Stunde unter Rückfluss erhitzt. Durch die Methylolierungsreaktion löst sich das Melamin auf und es bildet sich eine klare Lösung. Nach Abkühlen auf 45 °C werden 18 ml einer 2 n Amidosulfonsäurelösung schnell eingemischt, dann werden mit einem Ultra-Turrax unter hoher Scherung von 15.000 bis 20.000 U/min 13 g AEROSIL R 812 innerhalb von 5 Minuten eingerührt. Beim Dispergieren nimmt das Volumen der Harzlösung auf ca. 800 ml zu.

Diese Melaminharz/AEROSIL/Luft-Dispersion wird in eine vorgeheizte Plattenform, die mit einem Trennmittel versehen wurde, eingebracht (120 °C). Verschlossen ist diese Form mit einer Gasbetonplatte, damit das wässrige Dispergiermedium sowie die Reaktionsprodukte der Aminoharzkondensation abgeführt werden können. Nach wenigen Minuten bei 120 °C härtet das Harz aus. Der Schäumungsprozess ist nach 2 Stunden bei 120 bis 135 °C beendet. Nach Abkühlen kann das geschäumte Werkstück problemlos aus der Form entnommen werden. Der Schaum hatte eine Dichte von 0,11 g/cm³. Wasser perlte nicht nur im Oberflächenbereich, sondern auch auf bearbeiteten Bereichen (Bruchstellen, gesägte und geschliffene Stellen) beim Übergießen vollständig ab.

Die Messung der Wärmeleitfähigkeit ergab die in Tabelle 1 zusammengestellten Werte.

**Tabelle 1**

| **Temperatur [°C]** | **Wärmeleitfähigkeit [W/m*K]** |
|---|---|
| 10 | 0,038 |
| 20 | 0,039 |
| 30 | 0,041 |

### Beispiel 2

180 g Melamin werden mit 270 g einer 30%-igen wässrigen Formaldehydlösung analog Beispiel 1 umgesetzt und nach Zusatz von 18 g AEROSIL R 8200 weiterbehandelt. Der Schaum hatte eine Dichte von 0,09 g/cm³ und wies gegenüber aufgebrachtem Wasser gleiches Verhalten wie der in Gegenwart von AEROSIL R 812 hergestellte auf.

Die Messung der Wärmeleitfähigkeit ergab die in Tabelle 2 aufgeführten Werte.

**Tabelle 2**

| **Temperatur [°C]** | **Wärmeleitfähigkeit [W/m*K]** |
|---|---|
| 10 | 0,038 |
| 20 | 0,039 |
| 30 | 0,040 |

### Beispiel 3

150 g Melamin werden mit 240 g einer 30%-igen wässrigen Formaldehydlösung analog Beispiel 1 umgesetzt und nach Zusatz von 13 g AEROSIL R 812 weiterbehandelt. Die Herstellung der Melaminharz/AEROSIL/Luft-Dispersion erfolgte durch 15-minütiges Dispergieren mittels einer Dissolverscheibe bei 2000 U/min. Der Schaum hatte eine Dichte von 0,08 g/cm³ und wies gegenüber aufgebrachtem Wasser gleiches Verhalten wie der mittels Ultra-Turrax hergestellte auf.

### Beispiele 4 - 7

Analog Beispiel 1 wurden Melamin/Formaldehyde unterschiedlicher Molverhältnisse, daraus Dispersionen unter Zusatz von AEROSIL R 812 hergestellt und diese zu Schaumplatten verformt. Die Dichten dieser Schäume sind in Tabelle 3 zusammengestellt.

**Tabelle 3**

| **Melamin [g]** | **Formaldehyd 30%ig, [g]** | **Molverhältnis** | **Dichte [g/cm³]** |
|---|---|---|---|
| 126 | 126 | 1:1,25 | 0,078 |
| 126 | 150 | 1:1,5 | 0,080 |
| 126 | 200 | 1:2 | 0,080 |
| 126 | 300 | 1:3 | 0,080 |

### Beispiel 8

150 g Melamin werden mit 257 g einer 30%-igen wässrigen Formaldehydlösung analog Beispiel 3 umgesetzt und nach Zusatz von 13 g AEROSIL R 812 weiterbehandelt. Diese Melaminharz/AEROSIL/Luft-Dispersion wird in eine auf 80 °C vorgeheizte Plattenform eingebracht. Das Material härtet innerhalb von 30 Minuten aus. Zur Entfernung des Dispergiermediums und der flüchtigen Reaktionsprodukte wurde die Temperatur der Form 4 Stunden bei 80 °C gehalten.

Der Schaum wies eine Dichte von 0,55 g/cm³ auf. Die Grenzflächeneigenschaften entsprechen denen für Schäume der Beispiele 1 bis 7. Spannungsrisse, die beim Aushärten von ungefüllten Melaminharzen beobachtet werden, treten bei der beschriebenen Verfahrensweise nicht auf.

### Beispiel 9

300 g eines Melamin/Formaldehyd-Flüssigharzes (PIAMID M 70) werden analog Beispiel 2 und 3 unter Zusatz von 18 ml einer 2 n Amidosulfonsäurelösung und 16 g AEROSIL R 8200 bei 45 °C mittels einer Dissolverscheibe intensiv vermischt.

Diese Melaminharz/AEROSIL/Luft-Dispersion wird analog den Beispielen 1 bis 7 in eine vorgeheizte Form eingebracht und innerhalb von 2 Stunden bei 120 bis 135 °C geschäumt und gehärtet. Der Schaum hatte eine Dichte von 0,09 g/cm³ und wies gegenüber auf gebrachtem Wasser gleiches Verhalten wie die nach den Beispielen 1 bis 8 hergestellten Schäume auf.

Die Wärmeleitfähigkeit entspricht mit 0,038 W/m*K für 20 °C dem Wert der für aus den Komponenten Melamin und Formaldehyd in situ hergestellten Schäume.

### Beispiel 10

120 g Melamin und 60 g Benzoguanamin werden mit 250 g einer 30-%gen wässrigen Formaldehydlösung, die mit Kaliumcarbonat auf pH=8 eingestellt wird, 2 Stunden unter Rückfluss erhitzt. Durch die Methylolierungsreaktion lösen sich Melamin und Benzoguanamin auf und es bildet sich eine klare Lösung. Nach Abkühlen auf 50 °C werden 18 ml einer 2 n Amidosulfonsäurelösung schnell eingemischt und anschließend mit einem Ultra-Turrax unter hoher Scherung von 15.000 bis 20.000 U/min 13 g AEROSIL R 812 innerhalb von 5 Minuten eingerührt.

Diese AEROSIL-Dispersion eines Melamin/Benzoguanamin-Mischharzes wird analog den Beispielen 1 bis 7 in eine vorgeheizte Form eingebracht und innerhalb von 2 Stunden bei 120 bis 135°C geschäumt und gehärtet. Der Schaum wies eine Dichte von 0,10 g/cm³ und eine Wärmeleitfähigkeit von 0,04 W/m*K für 20 °C auf.

## Patentansprüche

1. Verfahren zur Herstellung von treibmittelfreien Aminoharzschäumen enthaltend ein Aminoharz und zumindest an der Oberfläche hydrophobe Nanopartikel aus einem anorganischen und/oder organischen Material, mit folgenden Schritten:
a) Disperses Mischen einer wässrigen Lösung enthaltend mindestens einem Aminoharz-Präpolymer und zumindest an der Oberfläche hydrophobe Nanopartikel aus einem anorganischen und/oder organischen Material,
b) Kondensation des mindestens einen Aminoharz-Präpolymers unter gleichzeitigem intensivem Einmischen von Luft zur Ausbildung einer ternären Dispersion aus Aminoharz, Nanopartikeln und Luft und
c) thermisch induziertes Aufschäumen zum Aminoharzschaum.

2. Verfahren nach dem vorhergehenden Anspruch,
**dadurch gekennzeichnet, dass** das Aminoharz-Präpolymer in situ aus mindestens einer Aminkomponente und mindestens einer Aldehydkomponente durch eine Vorkondensation hergestellt wird.

3. Verfahren nach einem der vorhergehenden Ansprüche,
**dadurch gekennzeichnet, dass** das Aminoharz-Präpolymer durch Lösen eines modifizierten oder unmodifizerten Aminofestharz hergestellt wird.

4. Verfahren nach einem der vorhergehenden Ansprüche,
**dadurch gekennzeichnet, dass** die Luft mittels Hochleistungsrührer oder Hochleistungsdispergiersysteme eingemischt wird.

5. Verfahren nach einem der vorhergehenden Ansprüche,
**dadurch gekennzeichnet, dass** das Verfahren diskontinuierlich oder kontinuierlich durchgeführt wird.

6. Verfahren nach einem der vorhergehenden Ansprüche,
**dadurch gekennzeichnet, dass** der Aminoharzschaum zu Werkstoffen oder Formteilen weiterverarbeitet wird.

7. Verfahren nach einem der vorhergehenden Ansprüche,
**dadurch gekennzeichnet, dass** das anorganische Material aus Kieselgelen, Aluminiumoxiden, Titanoxiden, Schichtsilikaten, Schichthydroxiden und deren Gemischen ausgewählt wird.

8. Verfahren nach einem der vorhergehenden Ansprüche,
**dadurch gekennzeichnet, dass** organische Nanopartikel in Form von Nanodispersionen von Polymeren zugegeben werden.

9. Verfahren nach Anspruch 8,
**dadurch gekennzeichnet, dass** die Polymere durch Emulsionspolymerisation von Polystyrolen und/oder Methacrylaten hergestellt werden.

10. Verfahren nach einem der vorhergehenden Ansprüche,
**dadurch gekennzeichnet, dass** Nanopartikel mit einen Partikeldurchmesser im Bereich von 1 bis 500 nm, insbesondere von 1 bis 100 nm eingesetzt werden.

11. Verfahren nach einem der vorhergehenden Ansprüche,
**dadurch gekennzeichnet, dass** Nanopartikel aus einem hydrophoben Material eingesetzt werden.

12. Verfahren nach einem der vorhergehenden Ansprüche,
**dadurch gekennzeichnet, dass** die Nanopartikel an der Oberfläche hydrophob funktionalisiert werden.

13. Verfahren nach einem der vorhergehenden Ansprüche,
**dadurch gekennzeichnet, dass** das Aminoharz aus der Gruppe der Flüssig- und Festharze, auf Basis von Melamin/Formaldehyd, Melaminderivate/Formaldehyd, Harnstoff/Formaldehyd, Harnstoffderivate/Formaldehyd und deren Mischungen ausgewählt wird.

14. Verfahren nach einem der vorhergehenden Ansprüche,
**dadurch gekennzeichnet, dass** das Aminoharz aus einer Aminkomponente ausgewählt aus der Gruppe der Amino-1,3,5-triazine und einer Aldehydkomponente ausgewählt aus der Gruppe der Mono- oder Dialdehyde gebildet wird.

15. Verfahren nach dem vorhergehenden Anspruch,
**dadurch gekennzeichnet, dass** als Aminkomponente Melamin und/oder Benzoguanamin und als Aldehydkomponente Formaldehyd, Glyoxal und/oder Glutardialdehyd eingesetzt wird.

16. Verfahren nach einem der vorhergehenden Ansprüche,
**dadurch gekennzeichnet, dass** ein Aminoharzschaum mit einer im Wesentlichen geschlossenporigen Schaumstruktur erzeugt wird.

17. Verwendung der nach einem der vorhergehenden Ansprüche hergestellten Aminoharzschäume als Werkstoff zur Schall- oder Wärmedämmung oder Isoliermaterial zur Schall- oder Wärmedämmung.

## Claims

1. Method for producing propellant-free amino resin foams comprising an amino resin and nanoparticles which are hydrophobic at least on the surface and made of an inorganic and/or organic material, having the following steps:
a) disperse mixing of an aqueous solution comprising at least one amino resin prepolymer and nanoparticles which are hydrophobic at least on the surface and made of an inorganic and/or organic material,
b) condensation of the at least one amino resin prepolymer with simultaneous intensive mixing-in of air in order to form a ternary dispersion made of amino resin, nanoparticles and air, and
c) thermally-induced foaming to form amino resin foam.

2. Method according to the preceding claim,
**characterised in that** the amino resin prepolymer is produced in situ from at least one amine component and at least one aldehyde component by means of a precondensation.

3. Method according to one of the preceding claims,
**characterised in that** the amino resin prepolymer is produced by dissolving a modified or unmodified amino solid resin.

4. Method according to one of the preceding claims,
**characterised in that** the air is mixed in by means of high-power agitators or high-power dispersion systems.

5. Method according to one of the preceding claims,
**characterised in that** the method is implemented discontinuously or continuously.

6. Method according to one of the preceding claims, **characterised in that** the amino resin foam is further processed to form materials or moulded articles.

7. Method according to one of the preceding claims,
**characterised in that** the inorganic material is selected from silica gels, aluminium oxides, titanium oxides, layer silicates, layer hydroxides and mixtures thereof.

8. Method according to one of the preceding claims,
**characterised in that** organic nanoparticles in the form of nanodispersions of polymers are added.

9. Method according to claim 8,
**characterised in that** the polymers are produced by means of emulsion polymerisation of polystyrenes and/or methacrylates.

10. Method according to one of the preceding claims,
**characterised in that** nanoparticles with a particle diameter in the range of 1 to 500 nm, in particular of 1 to 100 nm, are used.

11. Method according to one of the preceding claims,
**characterised in that** nanoparticles made of a hydrophobic material are used.

12. Method according to one of the preceding claims,
**characterised in that** the nanoparticles are hydrophobically functionalised on the surface.

13. Method according to one of the preceding claims,
**characterised in that** the amino resin is selected from the group of liquid and solid resins, based on melamine/formaldehyde, melamine derivatives/formaldehyde, urea/formaldehyde, urea derivatives/formaldehyde and mixtures thereof.

14. Method according to one of the preceding claims,
**characterised in that** the amino resin is formed from an amino component selected from the group of amino-1,3,5-triazines and an aldehyde component selected from the group of mono- or dialdehydes.

15. Method according to the preceding claim,
**characterised in that** melamine and/or benzoguanamine is used as amine component and formaldehyde, glyoxal and/or glutardialdehyde is used as aldehyde component.

16. Method according to one of the preceding claims,
**characterised in that** an amino resin foam with an essentially closed-pore foam structure is produced.

17. Use of the amino resin foams produced according to one of the preceding claims as material for sound or heat insulation or insulating material for sound or heat insulation.

## Revendications

1. Procédé pour la fabrication de mousses de résine amino exemptes d'agent moussant, contenant une résine amino et au moins des nanoparticules hydrophobes sur la surface et constituées d'un matériau inorganique et/ou organique, comprenant les étapes suivantes :
a) le mélange en dispersion d'une solution aqueuse, contenant au moins un prépolymère de résine amino et au moins des nanoparticules hydrophobes sur la surface et constituées d'un matériau inorganique et/ou organique,
b) la condensation du au moins un prépolymère de résine amino tout en le mélangeant de manière intensive et simultanée à de l'air dans le but de former une dispersion ternaire de résine amino, de nanoparticules et d'air, et
c) le moussage induit par voie thermique pour donner une mousse de résine amino.

2. Procédé selon la revendication précédente, **caractérisé en ce que** le prépolymère de résine amino est fabriqué in situ à partir d'au moins un composant amino et d'au moins un composant aldéhyde par une précondensation.

3. Procédé selon l'une quelconque des revendications précédentes,
**caractérisé en ce que** le prépolymère de résine amino est fabriqué par dissolution d'une résine amino modifiée ou non modifiée.

4. Procédé selon l'une quelconque des revendications précédentes,
**caractérisé en ce que** l'air y est mélangé au moyen d'un agitateur à haute performance ou de systèmes de dispersion à haute performance.

5. Procédé selon l'une quelconque des revendications précédentes,
**caractérisé en ce que** le procédé est réalisé en mode discontinu ou continu.

6. Procédé selon l'une quelconque des revendications précédentes,
**caractérisé en ce que** la mousse de résine amino est transformée pour donner des matières premières ou des pièces moulées.

7. Procédé selon l'une quelconque des revendications précédentes,
**caractérisé en ce que** le matériau inorganique est choisi parmi des gels de silice, des oxydes d'aluminium, des oxydes de titane, des silicates stratifiés, des hydroxydes stratifiés et leurs mélanges.

8. Procédé selon l'une quelconque des revendications précédentes,
**caractérisé en ce que** des nanoparticules organiques sont ajoutées sous la forme de nanodispersions de polymères.

9. Procédé selon la revendication 8,
**caractérisé en ce que** les polymères sont fabriqués par polymérisation en émulsion de polystyrènes et/ou de méthacrylates.

10. Procédé selon l'une quelconque des revendications précédentes,
**caractérisé en ce que** l'on utilise des nanoparticules ayant un diamètre particulaire dans la plage de 1 à 500 nm, en particulier de 1 à 100 nm.

11. Procédé selon l'une quelconque des revendications précédentes,
**caractérisé en ce que** l'on utilise des nanoparticules constituées d'un matériau hydrophobe.

12. Procédé selon l'une quelconque des revendications précédentes,
**caractérisé en ce que** les nanoparticules sont fonctionnalisées sous forme hydrophobe sur la surface.

13. Procédé selon l'une quelconque des revendications précédentes,
**caractérisé en ce que** la résine amino est choisie dans le groupe constitué des résines liquides et solides, à base de mélamine/formaldéhyde, de dérivés de mélamine/formaldéhyde, d'urée/formaldéhyde, de dérivés d'urée/formaldéhyde et de leurs mélanges.

14. Procédé selon l'une quelconque des revendications précédentes,
**caractérisé en ce que** la résine amino est formée d'un composant d'amine choisi dans le groupe constitué des amino-1,3,5-triazines et d'un composant d'aldéhyde choisi dans le groupe constitué des mono- ou dialdéhydes.

15. Procédé selon la revendication précédente,
**caractérisé en ce que** l'on utilise, comme composants d'amine, la mélamine et/ou la benzoguanamine et, comme composant d'aldéhyde, le formaldéhyde, le glyoxal et/ou le glutardialdéhyde.

16. Procédé selon l'une quelconque des revendications précédentes,
**caractérisé en ce qu'**une mousse de résine amino est produite avec une structure de mousse à pores sensiblement fermés.

17. Utilisation des mousses de résine amino fabriquées selon l'une quelconque des revendications précédentes comme matière première pour l'isolation acoustique ou thermique ou comme matériau isolant pour l'isolation acoustique ou thermique.
